# EUROPEAN PATENT SPECIFICATION

(11) **EP 3 383 195 B1**
(45) Date of publication and mention of the grant of the patent: **04.01.2023**
(21) Application number: 16810216.8
(22) Date of filing: 29.11.2016
(51) Int. Cl.: A23G 3/48, A23G 4/06

(54) **CHEWING GUMS AND PRESSED MINTS HAVING SURFACE FEATURES**
KAUGUMMI UND GEPRESSTEN MINZTABLETTEN MIT STRUKTURIERTER OBERFLÄCHE
GOMMES À MÂCHER ET MENTHES PRESSÉES PRÉSENTANT DES CARACTÉRISTIQUES DE SURFACE

(30) Priority: 30.11.2015 US 201562261273 P
(43) Date of publication of application: 10.10.2018
(73) Proprietor: Wm. Wrigley Jr. Company, Chicago, IL 60642 (US)
(72) Inventor: GAO, Yang, Chicago Illinois 60642 (US)
(74) Representative: Haseltine Lake Kempner LLP
(86) International application number: PCT/US2016/063921
(87) International publication number: WO 2017/095774

(56) References cited:
- EP-A1- 0 449 782
- WO-A1-93/20711
- WO-A1-99/44436
- WO-A2-2008/027251
- WO-A2-2013/049800
- FR-A1- 2 646 756
- GB-A- 2 181 646
- US-A- 3 052 552
- US-A- 3 681 087
- US-A1- 2009 214 721
- US-A1- 2010 104 518
- US-A1- 2013 156 944

## Description

### BACKGROUND OF THE INVENTION

The present invention relates to chewing gums and other confections and methods of manufacturing them. More specifically, the present invention relates to chewing gum pieces having surface features composed of large, thin pieces of plant material such as leaves or fruit slices. In some embodiments, the plant material is physically compressed on semi-finished gum/pressed mint products during sheeting or by pressing in a tableting die.

Chewing gums and pressed mints are enjoyed by millions of consumers for their flavor and breath freshening properties, among other benefits. Many chewing gum consumers seek products that provide a novel appearance or sensory experience. Examples of products designed to appeal to these consumers include those with edible ink printing, those containing colored particles which may or may not provide flavor and/or textural sensations and those having a second chewing gum of a contrasting color coextruded with or surface applied to a first chewing gum composition. Pressed mint products may be treated similarly.

Many consumers are also seeking food products of all sorts which contain more natural and/or provide a more sophisticated or "gourmet" perception.

The present invention provides chewing gum and pressed mint products having a distinctive, attractive appearance as well as unique flavor and texture features.

EP 0449782 A1 provides a compressed confection tablet for dissolving in the oral cavity having timed release of a flavor ingredient and capable of adhering to the moist areas of the oral cavity comprising: a flavor ingredient intimately bound with a bioadhesive whereby said flavor and said bioadhesive adhere to the moist areas of the oral cavity as said compressed tabled dissolves in the oral cavity.

### SUMMARY OF THE INVENTION

The invention is defined in and by the appended claims. The present disclosure is directed to chewing gums and pressed mint products which include plant materials such as leaves and fruit slices adhered on their surface. The chewing gum or pressed mint piece will have at least one side surface of which a major portion of the area (i.e. at least 20% of the area) is covered by one piece or a few pieces of plant material, wherein the plant material is a leaf of a piece of fruit.

Due to a major portion of the surface of at least one side being covered by the plant material, the visual impact of the product is maximized. The relatively large area of each piece of plant material and the consumer's ability to visually identify it as a natural product conveys a perception of quality and a premium sensory experience which is reinforced by the flavor and texture contributions of the plant material. This compares to chewing gums and mints with mixed-in inclusions which would normally be severely fragmented in the mixing process if not divided before.

Another advantage of the present invention compared to inclusions of plant material mixed into the composition is that, in the present invention, the potential risk of microbial or other contamination by the plant material is limited to the roller(s) and other down-stream processing equipment.

In methods of the present invention, the thin pieces of plant material are adhered to the surface of the chewing gum or pressed mint by applying mechanical pressure to the plant material as it contacts the confectionery piece.

### BRIEF DESCRIPTION OF THE DRAWINGS

FIGURE 1 is a photograph of sticks of chewing gum with surface application of intact spearmint leaves.
FIGURE 2 is a photograph of sticks of chewing gum with surface application of mint leaf fragments
FIGURE 3 is a photograph of sticks of chewing gum with surface application of strawberry slices.
FIGURE 4 is a close-up photograph of sticks of chewing gum with surface application of strawberry slices.
FIGURE 5 is a photograph of sticks of chewing gum with surface application of strawberry pieces.
FIGURE 6 is a photograph of sticks of chewing gum with surface application of blueberry slices.
FIGURE 7 is a close-up photograph of sticks of chewing gum with surface application of blueberry slices.

### DESCRIPTION OF THE INVENTION

The invention is defined in and by the appended claims. The present disclosure is a chewing gum or pressed mint which has at least side of which a major portion of the area is covered by one or several thin pieces of plant material.

By a major portion of the area, it is meant that the one or several pieces of plant material will cover at least 20% or at least 30% or at least 40% or at least 50% or at least 60% or at least 70% or at least 80% of the area of the side of the confectionery piece to which they are applied.

In some embodiments, depending on the thinness and nature of the plant material, some portions of the area covered by the plant material may be translucent or transparent or otherwise only partially obscuring portions of the confectionery surface that are considered covered by the plant material for purposes of this invention. In some cases these transparent or translucent regions help convey the identity of the plant material.

By thin, it is meant that the thickness of the thinnest dimension of the plant material piece is such that it can be compressed into or onto the surface of the confectionery piece without significantly increasing its dimension or protruding above the original surface of the confectionery piece.

The plant material will be a leaf or a piece of fruit. In some embodiments, the plant material will be a leaf such as a mint leaf such as peppermint, spearmint or other edible members of the Labiatae (mint) family such as basil, rosemary, sage or oregano as well as non-mint herbs.

In some embodiments, the plant material will be a slice of fruit such as a slice of a strawberry, apple, blueberry, pear, peach, kiwi, pineapple, banana, cucumber or tomato. Herein is also disclosed, other types of thin pieces of plant material such as sliced nuts.

It may be desirable to preserve the plant material to ensure food safety and shelf life. This may be accomplished by any suitable method including embodiments where the plant material is dried, blanched, irradiated, freeze dried and/or treated with sulfites. In many cases it the slicing of the plant product may be facilitated by first freezing or drying the plant material. Fresh plant material may be used as long as proper treatment is applied to ensure safety and quality of the product for consumption.

In embodiments where the plant material has significant thickness such as fruits, it normally be necessary to slice the material or otherwise render it thin enough that it may be applied to the surface of the confection without significantly increasing the dimensions or projecting beyond the original surface.

The fundamental components of a chewing gum typically are a water-insoluble gum base portion and a water-soluble bulking agent portion. The primary component of the gum base is an elastomeric polymer which provides the characteristic chewy texture of the product. The gum base will typically include other ingredients which modify the chewing properties or aid in processing the product. These include plasticizers, softeners, fillers, emulsifiers, plastic resins, as well as colorants and antioxidants. The water soluble portion of the chewing gum typically includes a bulking agent together with minor amounts of secondary components such as flavors, high-intensity sweeteners, colorants, water-soluble softeners, gum emulsifiers, acidulants and sensates. Typically, the water-soluble portion, sensates, and flavors dissipate during chewing and the gum base is retained in the mouth throughout the chew.

Any suitable chewing gum base and chewing gum formula may be used to produce a shell for center-filled chewing gums of the present invention. By suitable it is meant that the formula is capable of being processed through the selected equipment.

The insoluble gum base typically may contain any combination of elastomers, vinyl polymers, elastomer plasticizers, fillers, softeners, waxes and other optional ingredients such as colorants and antioxidants. The variety of gum base ingredients typically used provide the ability to modify the chewing characteristics of gums made from the gum base.

Elastomers provide the rubbery, cohesive nature to the gum which varies depending on this ingredient's chemical structure and how it may be compounded with other ingredients. Natural elastomers may include natural rubber such as smoked or liquid latex and guayule, natural gums such as jelutong, lechi caspi perillo, massaranduba balata, massaranduba chocolate, nispero, rosidinha, chicle, gutta percha, gutta kataiu, niger gutta, tenu, chilte, chiquibul, gutta hang kang. Synthetic elastomers may include high molecular weight elastomers such as butadiene-styrene copolymers and isobutylene-isoprene copolymers. Other polymers which sometimes serve as elastomers include polybutadiene and polyisobutylene, vinyl polymers such as polyvinyl acetate, polyethylene, vinyl copolymeric elastomers such as vinyl acetate/vinyl laurate, vinyl acetate/vinyl stearate, ethylene/vinyl acetate, polyvinyl alcohol or mixtures thereof. These polymers perform best when used in combination with butadiene-styrene copolymers and isobutylene-isoprene copolymers.

Vinyl polymeric and copolymeric type elastomers provide tack resistance, vary the chew characteristics of gums made from these bases and offer hydrophilic properties beneficial to sensory perception of the final gums. For copolymeric types, the amount of vinyl laurate, vinyl stearate, or ethylene present in the vinyl laurate/vinyl acetate (VLNA), vinyl stearate/vinyl acetate (VSNA), or ethylene/vinyl acetate (EVA) copolymers respectively typically ranges from about 10 to about 60 percent by weight of the copolymer. Average molecular weights of these polymers may range from about 2,000 to about 80,000. Ball and ring softening points of these polymers may range from about to 50 to 120°C. Polyvinyl acetate having an average molecular weight from about 8,000 to about 52,000 are preferred for use in the gum base and gum of the present invention. More preferred for chewing gum bases are those of from about 10,000 to about 35,000 molecular weight, and for bubble gum bases, those having from about 30,000 to about 60,000 molecular weight. Vinyl polymers typically release flavor quickly, and using iso-alkanic waxes exhibiting small crystalline structure with these vinyl polymers extends flavor release.

Petroleum waxes aid in the curing of the finished gum made from the gum base as well as improve shelf-life and texture. Wax crystal size when hard also improves the release of flavor. Those waxes high in iso-alkanes have a smaller crystal size than those waxes high in normal-alkanes, especially those with normal-alkanes of carbon numbers less than 30. The smaller crystal size allows slower release of flavor since there is more hindrance of the flavor's escape from this wax versus a wax having larger crystal sizes.

Synthetic waxes are produced by means atypical of petroleum wax production. The synthetic waxes may include waxes containing branched alkanes and copolymerized with monomers such as, but not limited to, propylene and polyethylene and Fischer-Tropsch type waxes. Polyethylene wax is not in the same category as polyethylene, a polymer of ethylene monomers.

Elastomer solvents (sometimes called elastomer plasticizers) vary the firmness of the gum base. Their specificity on elastomer inter-molecular chain breaking (plasticizing) along with their varying softening points cause varying degrees of finished gum firmness when used in base. This is also important when one wishes to provide more elastomeric chain exposure to the alkanic chains of the waxes. Elastomer solvents include natural rosin esters such as glycerol ester of partially hydrogenated rosin, glycerol ester of polymerized rosin, glycerol ester of partially dimerized rosin, glycerol ester of rosin, glycerol ester of tall oil rosin, pentaerythritol esters of partially hydrogenated rosin, partially hydrogenated methyl esters of rosin, pentaerythritol ester of rosin, synthetic elastomer plasticizers such as terpene resins derived from .aipha- pinene, beta-pinene and/or d-limonene, and mixtures thereof. The elastomer solvents used may be of one type or of combinations of more than one. Typically, the ratios of one to the other are dependent on each respective softening point, on each effect on flavor release, and on each respective degree of tack they cause to the gum. Ball and ring softening points of the rosin ester types described above may range from about 60 to about 120°C. Softening points of the terpene resins may range from about 60 to about 130°C and an average molecular weight of from about 500 to 2,000. Occasionally, both terpene and rosin ester resins may be used together.

Softeners modify the texture, cause the hydrophobic and hydrophilic components of the base to be miscible, and may further plasticize the synthetic elastomers of the gum base. Softeners include fully hydrogenated oils of cottonseed, soybean, palm, palm kernel, coconut, safflower and the like, as well as monoglycerides, diglycerides, acetylated monoglycerides, distilled mono- and digiycerides and de-oiled or "powdered" lecithin. The glycerides and lecithin are sometimes referred to as emulsifiers.

Fillers used in gum base modify the texture of the gum base and aid in processing. Fillers include carbonate or precipitated carbonated types such as magnesium and calcium carbonate, ground limestone and silicate types such as magnesium and aluminum silicate, clay, alumina, talc, as well as titanium oxide, mono- di- and tri-calcium phosphate, cellulose polymers such as ethyl, methyl and wood or mixtures thereof.

Other optional ingredients such as antioxidants and colorants may also be used in the gum base. Antioxidants prolong shelf-life and storage of gum base, finished gum or their respective components including fats and flavor oils. Antioxidants suitable for use in gum base or gum of the present invention include butyiated hydroxyanisole (BHA), butylated hydroxytoluene (BHT), beta -carotenes, tocopherols, acidulants such as Vitamin C, propyl gallate, other synthetic and natural types or mixtures thereof in free-flowing ground or pulverized form.

The soluble portion of chewing gums is composed of flavoring agents (including sensates such as physiological cooling agents, warming agents and tingling agents), bulking agents (also called bulk sweeteners), high intensity sweeteners, colors, acidulants, fillers, emulsifiers, water soluble softening agents and binders.

Bulk sweeteners include both sugars and sugar alcohols. Bulk sweeteners typically constitute about 5% to about 95% by weight of the chewing gum, more typically, about 20% to about 80% by weight, and more commonly, about 30% to about 60% by weight of the gum. Sugar sweeteners generally include saccharide-containing components commonly known in the chewing gum art, including but not limited to, sucrose, dextrose, maltose, dextrin, dried invert sugar, fructose, galactose, corn syrup solids, and the like, alone or in combination. Sugarless sweeteners include, but are not limited to, sugar alcohols such as sorbitol, mannitol, xylitol, hydrogenated starch hydrolysates, maltitol, erythritol, isomalt and the like, alone or in combination.

High-intensity artificial sweeteners can also be used, alone or in combination, with the above. Preferred sweeteners include, but are not limited to, sucralose, aspartame, N-substituted APM derivatives such as neotame, salts of acesulfame, alitame, saccharin and its salts, cyclamic acid and its salts, glycyrrhizin, dihydrochalcones, thaumatin, monellin, stevia and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extrusion may be used to achieve the desired release characteristics.

Softeners are added to the chewing gum in order to optimize the chewability and mouth feel of the gum. The softeners, which are also known as plasticizers and plasticizing agents, generally constitute between approximately 0.5% to about 15% by weight of the chewing gum. The softeners may include glycerin, lecithin, and combinations thereof. Aqueous sweetener solutions such as those containing sorbitol, hydrogenated starch hydrolysates, corn syrup and combinations thereof, may also be used as softeners and binding agents in chewing gum.

Combinations of sugar and/or sugarless sweeteners may be used in chewing gum. Additionally, the softener may also provide additional sweetness such as with aqueous sugar or alditol solutions.

If a low calorie gum is desired, a low calorie bulking agent can be used. Examples of low calorie bulking agents include: polydextrose; oligofructose (Raftilose); inulin (Raftilin); fructooligosaccharides (NutraFlora); palatinose oligosaccharide; guar gum hydrolysate (BeneFiber); or indigestible dextrin (Fibersol). However, other low calorie bulking agents can be used.

A variety of flavoring agents can also be used, if desired. The flavor can be used in amounts of about 0.1 to about 15 weight percent of the gum, and preferably, about 0.2% to about 5% by weight. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion. Included in the general category of flavors are sensates, chemicals which impart physiological sensations in the mouth such as cooling agents, warming agents and tingling agents. Examples of cooling agents include menthol, WS-23, WS-3, WS-5, isopulegol, esters of menthol such as menthyl succinate, menthyl lactate and menthyl glutarate, among others. Warming and tingling agents include capsaicin, piperine, jambu and spilanthol.

In general, chewing gum is manufactured by sequentially adding the various chewing gum ingredients to a commercially available mixer known in the art. After the ingredients have been thoroughly mixed, the gum mass is discharged from the mixer. In a variation, a mixing extruder may be used to mix the ingredients and discharge the mixed gum in a continuous process. The mass is then typically passed through an extruder and a series of sizing and scoring rollers to produce sheets of chewing gum at the desired thickness and scored to define the finished piece size. In the present invention, the plant material may distributed across the sheet prior to introduction to a sizing roller. It may be necessary to spray the sheet with an edible adhesive such as a sugar, sugar alcohol or syrup solution prior to distributing the plant material on the surface. This improves adherence of the plant material to the gum sheet.

In the case of pressed mints, these are typically composed primarily of a compressible sugar or sugar alcohol composition which can be purchased from sugar and polyol manufacturers. The compressible powder is typically blended with liquid or dried flavoring agents, as well as colors, and other optional ingredients. The blended composition is typically introduced into a tablet press, such as a rotary tablet press and compressed with die forms to produce a hard tablet having a shape determined by the die. In the present invention, the plant material pieces may be introduced during the initial compression or in a subsequent compression step.

The present invention also contemplates other methods of attaching the plant material to the surface of the confectionery piece.

### EXAMPLES

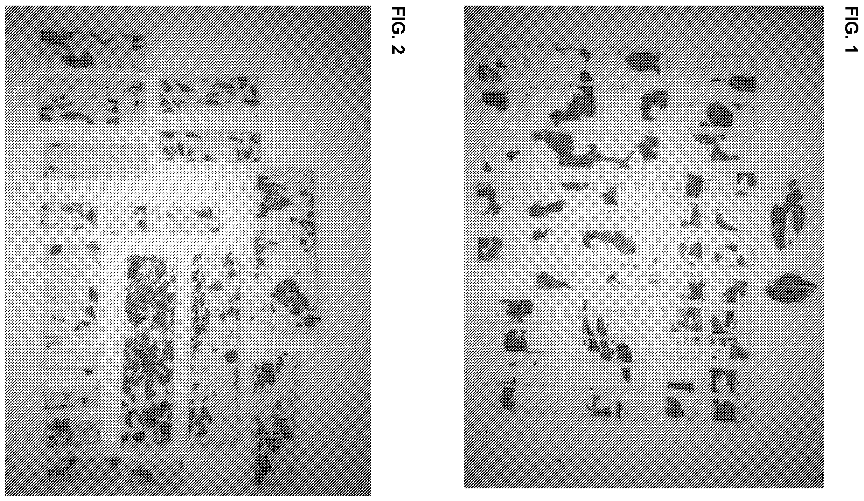

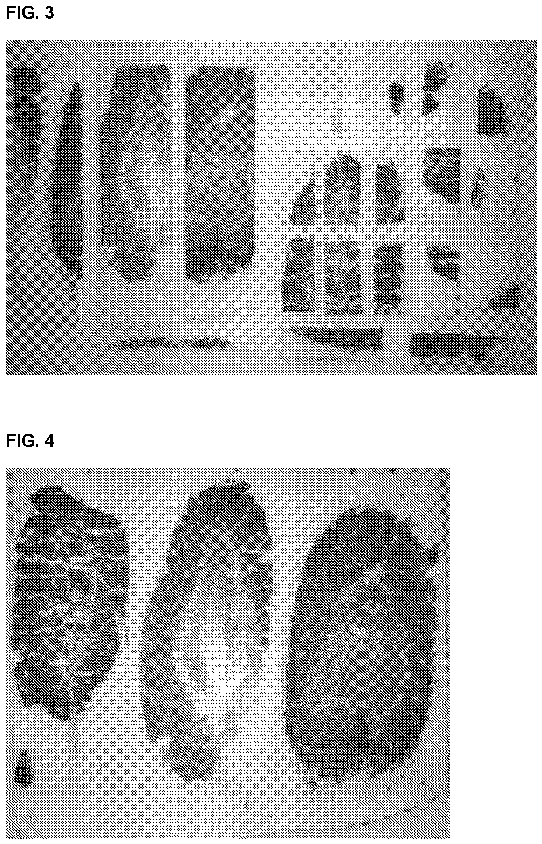

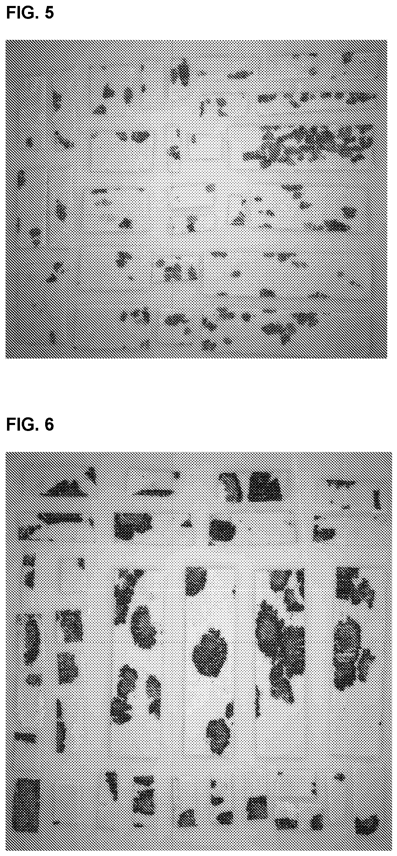

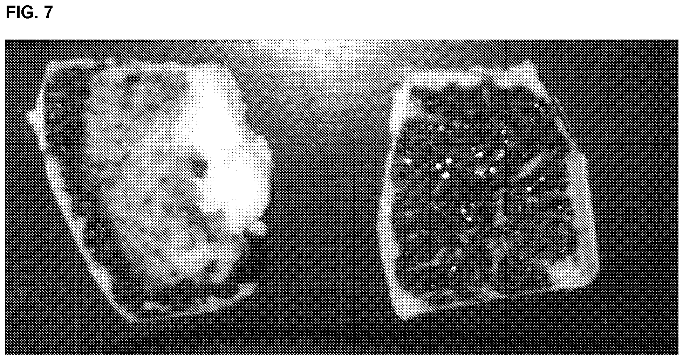

Example 1: A chewing gum was prepared in a laboratory scale Z-blade mixer according to the formula of Example 1 (Table 1). A rolling station was used to hand-roll the gum composition into a flat slab about 3mm in thickness.
Example 2: Dry mint leaves were made using a freeze-drying process. In this freeze-drying process, fresh mint leaves were picked from supermarket, washed, then laid flat as single layer in each tray and frozen at -25°C overnight. Frozen leaves were then transferred to a commercial freezer Labconco^{™} for vacuum drying under 0°C until 90% or above moisture was removed. These were applied evenly to the surface of the gum slab from Example 1. During this process, rolling compound was not used in order to improve attachment between plant material and the gum surface. The stainless roller was used to press the mint leaves into the surface of the gum sheet and to size down the sheet to about 0.9mm. This required approximately 6-7 passes with the roller. The finished gum sheet was about 0.9mm thickness that had mint leaves compressed on to one side surface. (Figure 1)
Example 3: The process of Example 2 was repeated except that commercially dried mint leaves were used. The product is shown in Figure 2.
Example 4: A strawberry flavored chewing gum was prepared by a process similar to that of Example 1 according to the formula in Table 1.
Example 5: Dried, sliced strawberries were applied to the gum slab which was then rolled as in Example 2 to adhere the strawberry pieces to the gum sheet. Figure 3 and 4 show the product of Example 5 with large dried strawberry slices as shown in both figures. Figure 3 shows gum pieces that were further cut apart, where Fig 4 shows a larger uncut gum piece.
Example 6 was identical to Example 5 except smaller dried strawberry pieces (~5mm) were used. See Figure 5 which shows a smaller and more discrete surface infusion appearance.
Example 7: A blueberry flavored chewing gum was prepared according to the formula in Table 1 using a process similar to that of Example 1. Dried, half sliced blueberries were applied to the gum slab which was then rolled as in Example 2 to adhere the blueberry pieces to the gum sheet. See Figures 6 and 7, where Fig 7 showing a close up of the finished gum trimmed around the shape of blueberry pieces applied to the surface.

| TABLE 1 | | | |
|---|---|---|---|
| | Example 1 | Example 4 | Example 7 |
| Gum Base | 20.00 | 27.5 | 27.5 |
| Corn Syrup | 16.00 | 0 | 0 |
| Glycerin | 1.00 | 1 | 1 |
| Sugar | 62.00 | 70 | 68.6 |
| Mint Flavor | 1.00 | 0 | 0 |
| Natural Strawberry flavor | 0 | 1.1 | 0 |
| Natural Blueberry flavor | 0 | 0 | 2.5 |
| Encapsulated Acids | 0 | 0.4 | 0.4 |
| Total | 100.00 | 100.00 | 100.00 |

Unless otherwise specified, all percentages provided here are percent by weight of the identified product or component. The present invention has been described with in combination with certain embodiments which serve to illustrate but not limit the invention which is defined by the following claims.

## Claims

1. A chewing gum piece or a pressed mint confectionery piece,
the chewing gum piece comprising a gum base, a flavor, a sweetener and plant material;
the pressed mint confectionery piece comprising a compressible powder, a flavor, and plant material;
wherein at least 20% of at least one side of the chewing gum piece or pressed mint confection is covered by at least one piece of plant material, and
wherein the plant material is a leaf or a piece of fruit.

2. The chewing gum piece or the pressed mint confectionery piece of claim 1 wherein at least 30% of at least one side of the chewing gum piece is covered by at least one piece of plant material.

3. The chewing gum piece or the pressed mint confectionery piece of claim 1 wherein at least 40% of at least one side of the chewing gum piece is covered by at least one piece of plant material.

4. The chewing gum piece or the pressed mint confectionery piece of claim 1 wherein at least 50% of at least one side of the chewing gum piece is covered by at least one piece of plant material.

5. The chewing gum piece or the pressed mint confectionery piece of claim 1 wherein at least 60% of at least one side of the chewing gum piece is covered by at least one piece of plant material.

6. The chewing gum piece or the pressed mint confectionery piece of claim 1 wherein at least 70% of at least one side of the chewing gum piece is covered by at least one piece of plant material.

7. The chewing gum piece or the pressed mint confectionery piece of claim 1 wherein at least 80% of at least one side of the chewing gum piece is covered by at least one piece of plant material.

8. The chewing gum piece or the pressed mint confectionery piece of any of claims 1 to 7 wherein the plant material is dried.

9. The chewing gum piece or the pressed mint confectionery piece of claim 1, wherein the leaf is a mint leaf selected from peppermint, spearmint, basil, rosemary, sage or oregano.

10. The chewing gum piece or the pressed mint confectionery piece of claim 1, wherein the piece of fruit is selected from strawberry, apple, blueberry, pear, peach, kiwi, pineapple, banana, cucumber or tomato.

## Patentansprüche

1. Kaugummistück oder gepresstes Minzkonfekt,
wobei das Kaugummistück ein Gummibasismaterial, einen Aromastoff, ein Süßungsmittel und Pflanzenmaterial umfasst;
das gepresste Minzkonfekt ein komprimierbares Pulver, ein Aroma und Pflanzenmaterial umfasst;
wobei mindestens 20 % von mindestens einer Seite des Kaugummistücks oder des gepressten Minzkonfekts mit mindestens einem Stück des Pflanzenmaterials bedeckt sind, und
wobei das Pflanzenmaterial ein Blatt oder ein Fruchtstück ist.

2. Kaugummistück oder gepresstes Minzkonfekt nach Anspruch 1, wobei mindestens 30 % von mindestens einer Seite des Kaugummistücks mit mindestens einem Stück Pflanzenmaterial bedeckt sind.

3. Kaugummistück oder gepresstes Minzkonfekt nach Anspruch 1, wobei mindestens 40 % von mindestens einer Seite des Kaugummistücks mit mindestens einem Stück Pflanzenmaterial bedeckt sind.

4. Kaugummistück oder gepresstes Minzkonfekt nach Anspruch 1, wobei mindestens 50 % von mindestens einer Seite des Kaugummistücks mit mindestens einem Stück Pflanzenmaterial bedeckt sind.

5. Kaugummistück oder gepresstes Minzkonfekt nach Anspruch 1, wobei mindestens 60 % von mindestens einer Seite des Kaugummistücks mit mindestens einem Stück Pflanzenmaterial bedeckt sind.

6. Kaugummistück oder gepresstes Minzkonfekt nach Anspruch 1, wobei mindestens 70 % von mindestens einer Seite des Kaugummistücks mit mindestens einem Stück Pflanzenmaterial bedeckt sind.

7. Kaugummistück oder gepresstes Minzkonfekt nach Anspruch 1, wobei mindestens 80 % von mindestens einer Seite des Kaugummistücks mit mindestens einem Stück Pflanzenmaterial bedeckt sind.

8. Kaugummistück oder gepresstes Minzkonfekt nach einem der Ansprüche 1 bis 7, wobei das Pflanzenmaterial getrocknet ist.

9. Kaugummistück oder gepresstes Minzkonfekt nach Anspruch 1, wobei das Blatt ein Minzblatt ausgewählt aus Pfefferminz, grüner Minze, Basilikum, Rosmarin, Salbei oder Oregano ist.

10. Kaugummistück oder gepresstes Minzkonfekt nach Anspruch 1, wobei das Fruchtstück ausgewählt ist aus Erdbeere, Apfel, Blaubeere, Birne, Pfirsich, Kiwi, Ananas, Banane, Gurke oder Tomate.

## Revendications

1. Pièce de chewing-gum ou pièce de confiserie à la menthe pressée,
la pièce de chewing-gum comprenant une gomme de base, un arôme, un édulcorant et une matière végétale ;
la pièce de confiserie à la menthe pressée comprenant une poudre compressible, un arôme, et une matière végétale ;
au moins 20 % d'au moins un côté de la pièce de chewing-gum ou de la confiserie à la menthe pressée étant recouverts d'au moins une pièce d'une matière végétale, et
la matière végétale étant une feuille ou une pièce de fruit.

2. Pièce de chewing-gum ou pièce de confiserie à la menthe pressée selon la revendication 1, au moins 30 % d'au moins un côté de la pièce de chewing-gum étant recouverts par au moins une pièce d'une matière végétale.

3. Pièce de chewing-gum ou pièce de confiserie à la menthe pressée selon la revendication 1, au moins 40 % d'au moins un côté de la pièce de chewing-gum étant recouverts par au moins une pièce d'une matière végétale.

4. Pièce de chewing-gum ou pièce de confiserie à la menthe pressée selon la revendication 1, au moins 50 % d'au moins un côté de la pièce de chewing-gum étant recouverts par au moins une pièce d'une matière végétale.

5. Pièce de chewing-gum ou pièce de confiserie à la menthe pressée selon la revendication 1, au moins 60 % d'au moins un côté de la pièce de chewing-gum étant recouverts par au moins une pièce d'une matière végétale.

6. Pièce de chewing-gum ou pièce de confiserie à la menthe pressée selon la revendication 1, au moins 70 % d'au moins un côté de la pièce de chewing-gum étant recouverts par au moins une pièce d'une matière végétale.

7. Pièce de chewing-gum ou pièce de confiserie à la menthe pressée selon la revendication 1, au moins 80 % d'au moins un côté de la pièce de chewing-gum étant recouverts par au moins une pièce d'une matière végétale.

8. Pièce de chewing-gum ou pièce de confiserie à la menthe pressée selon l'une quelconque des revendications 1 à 7, la matière végétale étant séchée.

9. Pièce de chewing-gum ou pièce de confiserie à la menthe pressée selon la revendication 1, la feuille étant une feuille de menthe choisie parmi la menthe poivrée, la menthe verte, le basilic, le romarin, la sauge ou l'origan.

10. Pièce de chewing-gum ou pièce de confiserie à la menthe pressée selon la revendication 1, la pièce de fruit étant choisie parmi la fraise, la pomme, la myrtille, la poire, la pêche, le kiwi, l'ananas, la banane, le concombre ou la tomate.
